# EUROPÄISCHE PATENTSCHRIFT

(11) **EP 1 550 925 B1**
(45) Veröffentlichungstag und Bekanntmachung des Hinweises auf die Patenterteilung: **31.03.2010**
(21) Anmeldenummer: 04030725.8
(22) Anmeldetag: 23.12.2004
(51) Int. Cl.: G05D 23/19, G05B 13/02, F24F 11/00, B64D 13/08

(54) **Temperaturregelung**
Temperature control
Régulation de la température

(30) Priorität: 29.12.2003 DE 10361381
(43) Veröffentlichungstag der Anmeldung: 06.07.2005
(73) Patentinhaber: Airbus Operations GmbH, 21129 Hamburg (DE)
(72) Erfinder: Fauret, Jean Remy, 22765 Hamburg (DE)
(74) Vertreter: Kopf, Korbinian Paul

(56) Entgegenhaltungen:
- WO-A-96/20109
- US-A- 2 937 011
- US-A- 5 410 890
- US-A- 5 931 376

## Beschreibung

Die vorliegende Erfindung betrifft eine Temperaturregelung bzw. Steuerung. Insbesondere betrifft die vorliegende Erfindung ein Verfahren zur Regelung der Temperatur in einem Raum bestehend aus einer oder mehreren Zellen, eine Regelungseinrichtung zur Regelung der Temperatur in einem Raum bestehend aus einer oder mehreren Zellen und ein Computerprogramm zur Steuerung eines Heizsystems zur Regelung der Temperatur in einem Raum bestehend aus einer oder mehreren Zellen.

Im Stand der Technik sind zahlreiche Verfahren zur Temperaturregelung und Temperaturregelungseinrichtungen bekannt. Insbesondere bei Verkehrsflugzeugen wird Zuluft durch eine Heizung geführt und entsprechend erwärmt, bevor sie in einen Raum eingeführt wird, dessen Temperatur ansteigen soll. Bei diesem Raum handelt es sich beispielsweise um einen Bereich, in dem die Sitze für die Fluggäste untergebracht sind.

Die in die Heizung eingeleitete Luft wird in bekannten Vorrichtungen und Verfahren aus der Luft aus einem Luftmischer und der Luft aus einem Zapfluftverdichter zusammengemischt. Diese Zusammenmischung wird durch ein sog. Trimmventil (TAV) geregelt. Sowohl das Trimmventil als auch die Heizung werden über eine eigene Regelschleife unter Verwendung eines PID-Verfahrens (Proportional, Integral, Derivative) gesteuert. Nachteilig wirkt sich hierbei insbesondere aus, dass die über das Trimmventil eingestellte Zuluft in die Heizung auf ihre Regelung sehr viel schneller reagiert als die Heizung auf die Heizungsregelung reagieren kann. Somit kann es zu ungewollten Oszillationen in der Temperatur am Heizungsausgang kommen oder die Temperatur am Heizungsausgang kann über ihren Soll-Wert hinausschießen.

Ein weiterer Nachteil von derartigen Vorrichtungen und Verfahren zur Regelung der Temperatur in einem Raum gemäß dem Stand der Technik besteht darin, dass die Heizung nur langsam auf eine Schwankung der Zulufttemperatur reagiert, zum Beispiel indirekt über eine daraus resultierende Schwankung der Temperatur des Raumes, dessen Temperatur zu regeln ist.

WO 96/20109 A betrifft eine Temperatursteuerung für unabhängige Räume, welche zwei separate, unabhängige Kühlaggregate, einen Ventilator und einen Wärmetauscher aufweist. Das erste Aggregat steuert die Luftversorgung des ersten Raums und das zweite Aggregat steuert die Luftversorgung des zweiten Raums. Die Temperatur wird hierbei durch Mischung von kalter Außenluft und heißer Motorenluft erreicht.

US-A-5 410 890 betrifft eine Steuerungsvorrichtung für eine Klimaanlage, welche einen Temperaturunterschied einer Temperatur in einem Raum misst und als Stellgröße eine Fuzzy-Steuerung verwendet.

Vor diesem Hintergrund ist es eine Aufgabe der Erfindung, eine verbesserte Temperaturregelung in einem Raum bereitzustellen.

Diese Aufgabe wird durch die Gegenstände der unabhängigen Ansprüche gelöst. Vorteilhafte Weiterbildungen der Erfindung sind in den Unteransprüchen angegeben.

Gemäß einer beispielhaften Ausführungsform der vorliegenden Erfindung wird ein Verfahren zur Regelung der Temperatur in einem Raum in einem Luftfahrzeug bereitgestellt, wobei der Raum aus einer oder mehreren Zellen besteht, wobei die Regelung der Temperatur durch ein Heizsystem, das ein erstes Regelungsgerät aufweist, erfolgt, wobei das erste Regelungsgerät eine Heizung ist, und wobei das Verfahren die folgenden Schritte umfasst: Messung von Stellgrößen, umfassend eine Änderungsrate der Temperatur in einer ersten Zelle und eine Änderungsrate der Temperatur im Lufteinlasskanal vor der Heizung; Berechung von Steuergrößen zur Steuerung des mindestens einen Regelungsgeräts auf der Basis der gemessenen Stellgrößen, wobei die Berechnung der Steuergrößen durch eine nicht lineare Fuzzy-Logik innerhalb eines Regelkreises unter Verwendung der gemessenen Stellgrößen erfolgt; Übergabe der berechneten Steuergrößen an das mindestens eine Regelungsgerät; und Regelung der Temperatur von in die Zellen des Raumes eingeleiteter Luft durch das mindestens eine Regelungsgerät unter Verwendung der berechneten Steuergrößen.

Vorteilhafterweise wird bei dem hier angegebenen Regelungsverfahren die Nicht-Linearität einer Fuzzy-Steuerung ausgenutzt, wodurch ein Ausgabewert variieren kann, selbst wenn der Unterschied oder die Differenz zwischen zwei Stellgrößen, die zur Berechnung des Ausgabewertes (der Steuergröße) verwendet werden, konstant ist. Dies wäre für eine PID-Steuerung nicht möglich. Weiterhin kann der Regelkreis in Form eines feed-forward Regelkreises ausgeführt sein, so dass eine schnelle Steuerung erreicht wird.

Gemäß einer anderen beispielhaften Ausführungsform der vorliegenden Erfindung umfasst das Heizsystem ein erstes Regelungsgerät, ein zweites Regelungsgerät und ein Steuergerät. Hierbei ist das erste Regelungsgerät ein Trimmventil zur Regelung der Einlassraten von Luft aus einem Luftmischer und Luft aus einem Zapfluftverdichter und das zweite Regelungsgerät eine Heizung zum Erwärmen der Luft aus dem Trimmventil. Das Steuergerät wird zur Steuerung des Trimmventils oder zur Steuerung der Heizleistung der Heizung verwendet.

Die Heizleistung kann somit durch zwei Regelungsgeräte beeinflusst werden. Einerseits kann die in den Raum einströmende Luft direkt durch Erwärmen in der Heizung auf eine gewünschte Temperatur gebracht werden; andererseits besteht aber auch die Möglichkeit, die Temperatur der Einströmluft durch entsprechende Steuerung des Luftmischers zu verändern, indem das Mischungsverhältnis zwischen kalter Luft aus einem Luftmischer und heißer Luft aus einem Zapfluftverdichter variiert wird. Insbesondere ist durch Regelung des Trimmventils der Luftdruck in den Zellen einstellbar.

Gemäß einer weiteren beispielhaften Ausführungsform der vorliegenden Erfindung umfassen die gemessenen Stellgrößen eine oder mehrere der folgenden Größen: Eine Temperatur im Lufteinlasskanal vor der Heizung; eine Temperatur innerhalb der Heizung; eine Temperatur in einer ersten Zelle; eine Soll-Temperatur in der ersten Zelle; eine Änderungsrate der Temperatur in der ersten Zelle; und eine Änderungsrate der Temperatur im Lufteinlasskanal vor der Heizung.

Durch Auslesen verschiedener gemessener Stellgrößen innerhalb des Temperaturregelungskreises sind verschiedene Regelungsszenarien denkbar, die verschiedene äußere Umstände berücksichtigen, wie beispielsweise die Temperatur im Lufteinlasskanal vor der Heizung und die Soll-Temperatur in der ersten Zelle oder die Temperatur innerhalb der Heizung und die Änderungsrate der Temperatur in der ersten Zelle. Somit können, insbesondere in Verbindung mit der nicht linearen Fuzzy-Logik, situationsspezifische und auf die entsprechende Problemstellung angepasste, schnell reagierende Regelungsmechanismen bereitgestellt werden.

Gemäß einer weiteren beispielhaften Ausführungsform der vorliegenden Erfindung basiert die nicht lineare Fuzzy-Logik zur Berechnung der Steuergrößen aus den Stellgrößen auf UND-Verknüpfungen und zentroide Verfahren. Vorteilhafterweise stellt dieses Verfahren eine schnelle, effektive und flexible Methode zur Berechnung der Steuergrößen dar.

In einer anderen beispielhaften Ausführungsform der vorliegenden Erfindung ist eine Regelungseinrichtung zur Regelung der Temperatur in einem Raum in einem Luftfahrzeug angegeben, wobei der Raum aus einer oder mehreren Zellen besteht, wobei die Regelungseinrichtung umfasst: ein Heizsystem, das ein erstes Regelungsgerät aufweist, wobei das erste Regelungsgerät eine Heizung ist; mindestens einen Sensor zur Messung von Stellgrößen, umfassend eine Änderungsrate der Temperatur in einer ersten Zelle und eine Änderungsrate der Temperatur im Lufteinlasskanal vor der Heizung; einen Prozessor zur Berechung von Steuergrößen zur Steuerung des mindestens einen Regelungsgeräts auf der Basis der gemessenen Stellgrößen, wobei die Berechnung der Steuergrößen durch eine nicht lineare Fuzzy-Logik innerhalb eines Regelkreises unter Verwendung der gemessenen Stellgrößen erfolgt; mindestens ein Datenübertragungsmittel zur Übergabe der berechneten Steuergrößen an das mindestens eine Regelungsgerät, wobei das mindestens eine Regelungsgerät zur Regelung der Temperatur von in die Zellen des Raumes eingeleiteter Luft unter Verwendung der berechneten Steuergrößen ausgeführt ist.

Vorteilhafterweise ist diese Regelungseinrichtung in ein Verkehrsflugzeug integrierbar und ist ausgeführt, um die Temperatur in verschiedenen Zellen einzustellen. Diese Zellen können beispielsweise Cockpit, Sanitärzellen und Sitzbereiche für Bordpersonal und Fluggäste umfassen. Durch die Verwendung einer nicht linearen Fuzzy-Logik innerhalb des Regelkreises und einer Vielzahl von Stellgrößen zur Berechnung der Steuergrößen, die für die Steuerung der Regelungsgeräte verwendet werden, können beispielsweise Fluktuationen in der Temperatur der Zuluft auf vorteilhafte Weise in die Berechnung der Steuergrößen mit einbezogen werden und eine schnelle und eine effektive Temperaturregelung bereitgestellt werden.

Gemäß einer anderen beispielhaften Ausführungsform der vorliegenden Erfindung wird ein Computerprogramm zur Steuerung eines Heizsystems angegeben, das ein erstes Regelungsgerät aufweist, zur Regelung der Temperatur in einem Raum in einem Luftfahrzeug, wobei das erste Regelungsgerät eine Heizung ist, wobei der Raum aus einer oder mehreren Zellen besteht, wobei das Computerprogramm, wenn es auf einem Prozessor ausgeführt wird, den Prozessor anleitet, die folgenden Operationen auszuführen: Abrufen von gemessenen Stellgrößen, umfassend eine Änderungsrate der Temperatur in einer ersten Zelle und eine Änderungsrate der Temperatur im Lufteinlasskanal vor der Heizung; Berechung von Steuergrößen zur Steuerung des mindestens einen Regelungsgeräts auf der Basis der gemessenen Stellgrößen, wobei die Berechnung der Steuergrößen durch eine nicht lineare Fuzzy-Logik innerhalb eines Regelkreises unter Verwendung der gemessenen Stellgrößen erfolgt; Übergabe der berechneten Steuergrößen an das mindestens eine Regelungsgerät zur Regelung der Temperatur von in die Zellen des Raumes eingeleiteter Luft durch das mindestens eine Regelungsgerät unter Verwendung der berechneten Steuergrößen.

Weitere Aufgaben, Ausführungsformen und Vorteile der Erfindung ergeben sich aus den Unteransprüchen und aus der folgenden Beschreibung.

Im Folgenden wird die Erfindung anhand von Ausführungsbeispielen unter Bezugnahme auf die Zeichnungen näher beschrieben.
Fig. 1 zeigt eine schematische Darstellung einer Regelungseinrichtung zur Temperaturregelung in einem Raum.
Fig. 2 zeigt eine schematische Darstellung eines PID-Verfahrens zur Berechnung des Soll-Wertes der Temperatur in einem Lufteinlasskanal mit Beschränkung.
Fig. 3 zeigt eine schematische Darstellung eines PID-Verfahrens zur Berechnung des Soll-Wertes der Heizleistung unter Verwendung des Soll-Wertes der Temperatur in einem Lufteinlasskanal mit Beschränkung.
Fig. 4 zeigt eine schematische Darstellung eines Verfahrens zur Berechnung der Geschwindigkeit des Trimmventils.
Fig. 5 a zeigt eine 3-dimensionale Darstellung des Zusammenhangs zwischen dem Soll-Wert der Kabinentemperatur, der Temperatur im Lufteinlasskanal und dem Steuerungssignal an die Heizung gemäß einer beispielhaften Ausführungsform der vorliegenden Erfindung.
Fig. 5b zeigt den Zusammenhang von Fig. 5 a in einer anderen Perspektive.
Fig. 6 zeigt eine Mitgliedsgradfunktion gemäß einer beispielhaften Ausführungsform der vorliegenden Erfindung.
Fig. 7 zeigt ein Flussdiagramm eines Verfahrens gemäß einer beispielhaften Ausführungsform der vorliegenden Erfindung.
Fig. 8 zeigt ein Flussdiagramm eines anderen Verfahrens gemäß einer anderen bevorzugten Ausführungsform der vorliegenden Erfindung.
Fig. 9 zeigt ein Flussdiagramm eines weiteren Verfahrens gemäß einer weiteren bevorzugten Ausführungsform der vorliegenden Erfindung.

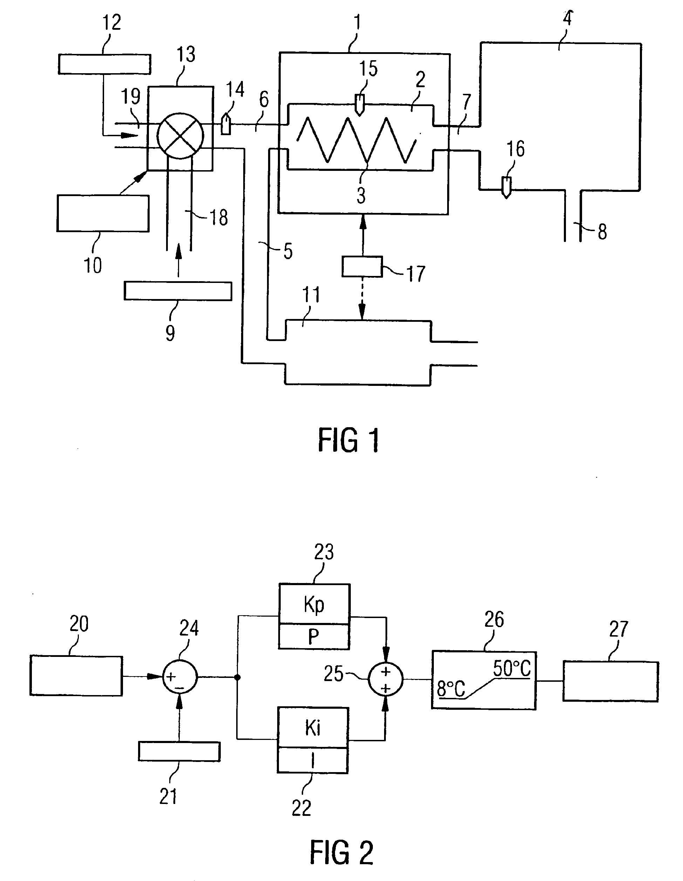

Fig. 1 zeigt eine schematische Darstellung einer Regelungseinrichtung zur Temperaturregelung in einem Raum, bestehend aus einer oder mehreren Zellen 4. Die Zuluft aus einem Luftmischer 12 und einem Zapfluftverdichter 9 wird mithilfe eines Trimmventiles 13 vermischt, wobei das Trimmventil 13 die Anteile aus heißer Luft von dem Zapfluftverdichter 9 und kalter Luft von dem Luftmischer 12 regelt. Weiterhin regelt das Trimmventil 13 die Durchflussmenge und somit den Druck in der Zelle 4. Gesteuert wird das Trimmventil 13 über Steuergerät 10, welches einen Prozessor umfasst.

Der über das Trimmventil 13 eingestellte Luftstrom wird nun über die Leitung 6 in eine Heizung 1 geleitet. Die Heizung 1 ist in ihrer Heizkammer 2 mit Heizelementen 3 versehen, wodurch der Luftstrom aufgeheizt werden kann. Derartige Heizungen 1 sind im Stand der Technik wohl bekannt und werden im Folgenden nicht weitergehend beschrieben.

Nach Verlassen der Heizung 1 wird der evtl. aufgeheizte Luftstrom über Leitung 7 in die Zelle 4 eingeleitet. Bei der Zelle 4 kann es sich beispielsweise um den Passagierraum in einem Verkehrsflugzeug handeln oder aber auch um den Cockpitraum oder eine Sanitärzelle in einem Verkehrsflugzeug. Weiterhin kann die Zelle 4 über eine Verbindung 8 mit weiteren Zellen verbunden sein.

Es ist zu beachten, dass auch weitere Heizungen 11 vorgesehen sein können, die über Zuleitungen 5 mit der Zuluft aus dem Trimmventil verbunden sind. Diese weiteren Heizungen sind dann dementsprechend mit weiteren Zellen verbunden, die mit der evtl. beheizten Luft versorgt werden.

Es sind verschiedene Messeinrichtungen oder Messfühler 14, 15, 16 zur Messung von Stellgrößen vorgesehen. Messeinrichtung 14 ist ausgeführt zum Messen der Temperatur im Lufteinlasskanal 6 vor der Heizung und zur Messung einer evtl. Änderungsrate der Temperatur im Lufteinlasskanal 6 vor der Heizung. Messeinrichtung 15 ist ausgeführt zum Messen der Temperatur der Luft innerhalb der Heizung 1 und zum Messen einer evtl.

Änderungsrate der Temperatur der Luft in der Heizung 1. Messeinrichtung 16 ist ausgeführt zum Messen der Temperatur in der ersten Zelle und zum Messen einer evtl. Änderungsrate der Temperatur in der ersten Zelle 4. Es können aber auch weitere Messeinrichtungen vorgesehen sein, z.B. Temperaturmesser in den weiteren Zellen 11 oder Messeinrichtungen zum Messen physikalischer Größen in den Zuleitungskanälen 18, 19 vor dem Trimmventil 13. Weiterhin können die physikalischen Größen neben der Temperatur und der Änderungsrate der Temperatur auch andere Größen wie z.B. die Strömungsgeschwindigkeit der Luft, den Luftdruck, die Luftfeuchtigkeit oder den Sauerstoffgehalt der Luft oder andere Größen enthalten.

Diese Messdaten werden dann an die Steuergeräte 10, 17 übergeben. Die Übergabe der Messdaten oder Stellgrößen erfolgt über Datenübertragungsleitungen oder eine drahtlose Verbindung (nicht dargestellt in Fig. 1). Das Steuergerät 17 regelt die Heizleistung der Heizung 1. In dem Falle, dass mehrere Heizungen 1, 11 vorgesehen sind, regelt das Steuergerät 17 auch die Heizleistungen der zusätzlichen Heizungen 11, oder es sind andere weitere Steuergeräte vorgesehen (nicht dargestellt in Fig. 1). Hierbei ist zu beachten, dass die Steuergeräte 10 und 17 auch in einem einzelnen Steuergerät zusammengefasst sein können, das beispielsweise in Form einer integrierten Schaltung oder eines Prozessors mit entsprechender Peripherie (nicht dargestellt in Fig. 1) ausgeführt sein kann.

Eine weitere Messgröße, die für die Temperaturregelung von Bedeutung ist, ist die Soll-Temperatur in der Zelle 4 oder einer anderen Zelle. Diese Stellgröße wird den Steuergeräten 10, 17 beispielsweise in Form einer manuellen Benutzereingabe übermittelt.

Das Trimmventil 13 ist z.B. in Form eines Schmetterlingventils ausgeführt, weist einen Durchmesser von etwa 3,08 cm (2 Inch) auf und wird über einen Schrittmotor verstellt.

Das Steuergerät 17 für die Heizung empfängt die in der Zelle 4 über den Sensor 16 gemessene Temperatur und vergleicht die gemessene Temperatur mit einem Temperatur-Sollwert, der beispielsweise von einem Mitglied des Bordpersonals manuell vorgegeben wird. Entsprechend dem Soll-Wert wird nun die Zellentemperatur oder Kabinentemperatur der entsprechenden Zelle eingestellt. Dies erfolgt in einem ersten Schritt über die Berechnung der Luftzufuhr für die Heizung, die über das Trimmventil 13 eingestellt wird. Dies wird in einer ersten Steuerschleife durchgeführt. In einer zweiten Steuerschleife oder Regelkreis wird die Temperatur der Heizluft gesteuert, indem der Temperatursensor 15 in der Heizung 1 von dem Steuergerät 17 ausgelesen wird und die Heizleistung der Heizung 1 entsprechend geregelt wird.

Fig. 2 zeigt ein PID-Verfahren zur Berechnung des Soll-Wertes der Temperatur in einem Lufteinlasskanal mit Temperaturbeschränkung. PID steht für Proportinal, Integral, Differentiell. PID-Steuergeräte sind derart ausgelegt, dass sie, wenn sie für die Einhaltung eines bestimmten Zustandes, z. B. einer Temperatur in einer Zelle, verantwortlich sind, nicht kontinuierlich nachregeln müssen, sondern mit einer begrenzten Anzahl von diskreten Nachregelungen auskommen. Beispiele für eine PID-Steuerung sind der Tempomat in einem Fahrzeug oder beispielsweise auch das Thermostat in einem Haushalt oder auch in einem Flugzeug, bei dem die Innenbordtemperatur auf einem weitgehend konstanten Wert gehalten werden soll.

Bei der hier dargestellten PID-Regelung wird die Ist-Temperatur in einer Zelle 21 mit der Soll-Temperatur in dieser Zelle 20 verglichen. Der daraus berechnete Fehler in der Temperatur oder Temperaturunterschied wird als Eingangssignal für einen Proportional-Integral-Algorithmus verwendet, der einen prinzipiell unbeschränkten Soll-Wert für die Temperatur im Ofen 1 (s. hierzu Fig. 1) erzeugt. Der Vergleich zwischen Soll-Temperatur 20 und Ist-Temperatur 21 erfolgt hierbei in dem Komparator 24 und der Proportional-Integral-Algorithmus erfolgt in den Bauteilen 22, 23, 25. Danach erfolgt eine Beschränkung des ausgegebenen Temperaturwertes nach oben oder nach unten durch Beschränkungselement 26. Danach wird über Ausgabeelement 27 eine beschränkte Soll-Temperatur der Luft in der Heizung ausgegeben. Die beschränkte Soll-Temperatur liegt in dem in Fig. 2 dargestellten Verfahren zwischen 8°C und 50°C.

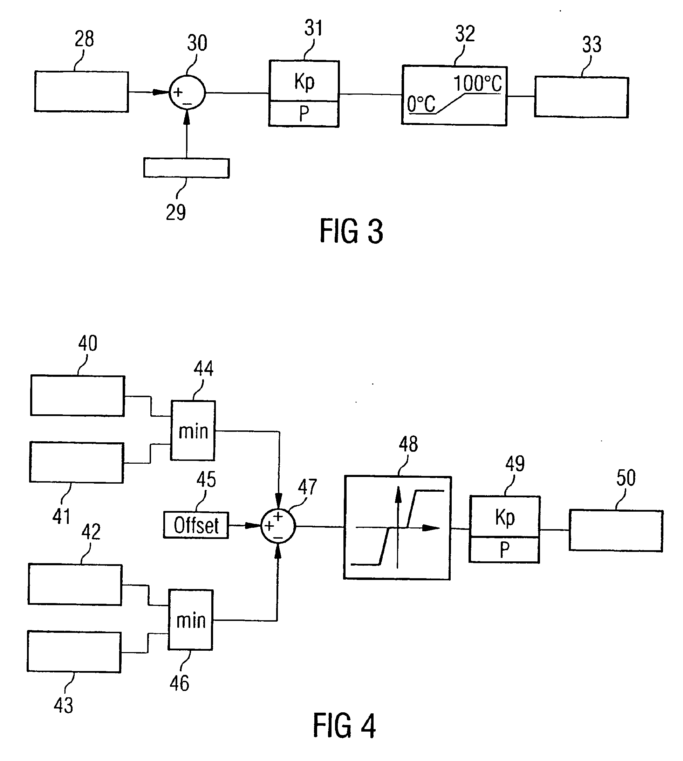

Fig. 3 zeigt ein PID-Verfahren zur Berechnung des Soll-Wertes einer Heizleistung unter Verwendung des Soll-Wertes der Temperatur in einem Lufteinlasskanal 7 oder innerhalb der Heizung 2 mit einer entsprechenden Temperaturbeschränkung. Der Soll-Wert der Temperatur 28 von dem Ausgabeelement 27 (siehe Fig. 2) wird mit der tatsächlichen Temperatur 29 innerhalb der Heizung 2 im Komparator 30 verglichen. Hierbei wird die tatsächliche Temperatur innerhalb der Heizung 2 über den Temperaturfühler 15 gemessen (s. hierzu Fig. 1). Der Komparator 30 berechnet hieraus einen Fehler, der nachfolgend einen Proportional-Algorithmus 31 durchläuft. Dem daraus resultierenden Steuerwert wird sodann eine Beschränkung 32 auferlegt. Als Ausgabewert entsteht auf diese Weise eine Steuergröße 33, die die Leistungsaufnahme der Heizung regelt.

Fig. 4 zeigt ein Verfahren zur Berechnung der Geschwindigkeit des Trimmventils. Da das Trimmventil (Bezugszeichen 13 in Fig. 1), das von dem Steuergerät 10 gesteuert wird, mehr als eine Heizung (Bezugszeichen 1, 11 in Fig. 1) mit Luft versorgen kann, ist es notwendig, dass bei der Berechnung der Schaltgeschwindigkeit des Trimmventils die kleinste Heizungstemperatur und die kleinste Soll-Temperatur in den verschiedenen Heizungen verwendet werden. In Fig. 4 ist der Fall dargestellt, dass es sich um zwei Heizungen handelt. Zunächst wird in Bauteil 46 die kleinere der beiden Ist-Temperaturen von der ersten Heizung 42 und der zweiten Heizung 43 festgestellt. Ebenso wird in Bauteil 44 die kleinere der beiden Soll-Temperaturen der ersten Heizung 40 und der zweiten Heizung 41 festgestellt. Sodann findet ein Vergleich zwischen der kleineren der beiden Soll-Temperaturen und der kleineren der beiden Ist-Temperaturwerte im Komparator 47 statt. Zu dem daraus resultierenden Fehler wird ein Offsetwert 45 hinzuaddiert. Dieser zusätzliche Offsetwert 45 beträgt z.B. 2°C. Dadurch ist gewährleistet, dass in einem stationären Zustand der Heizung keine Leistungsanforderung von einem Steuergerät an ein entsprechendes Regelungsgerät erfolgt. Als nächstes wird die Geschwindigkeit, mit der das Trimmventil gesteuert wird, in der Einheit 48 berechnet. Im darauffolgenden Proportional-Algorithmus 49 wird der Geschwindigkeitsfaktor berechnet und als Geschwindigkeits-Soll-Wert 50 des Trimmventils ausgegeben.

Einer der Hauptnachteile dieser PID-Regelungsverfahren ist es, dass im Falle einer Raumlufttemperaturregelung in einem Flugzeug, wie sie in Fig. 1 abgebildet ist, zwei Regelungsgeräte oder Aktuatoren verwenden werden, um die Temperatur in einer Zelle einzustellen. Hierdurch kann es zu ungewünschten Oszillationen zwischen dem Trimmventil und der Heizung kommen. Demzufolge kann der Fall auftreten, dass beide Regelungsgeräte versuchen, die Temperatur in der Zelle zu erhöhen, und die Temperatur dadurch, nicht zuletzt aufgrund der Trägheit der Heizung, über das gesteckte Ziel hinausschießt.

Weiterhin ist in bekannten Systemen die Temperatur der in die Heizung eingespeisten Luft nicht berücksichtigt. Eine Änderung der Temperatur der in die Heizung eingeführten Luft kann somit zu Temperaturschwankungen in der Kabine oder Zelle führen.

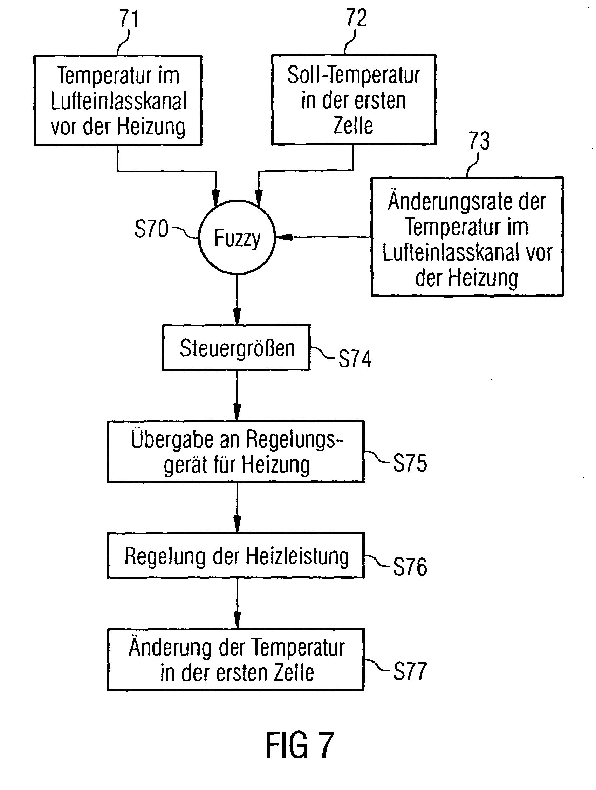

Fig. 7 zeigt ein Flussdiagramm eines Verfahrens gemäß einer beispielhaften Ausführungsform der vorliegenden Erfindung. Das erfindungsgemäße Verfahren bedient sich hierbei zur Berechnung von Steuergrößen, mit denen die Regelungsgeräte gesteuert werden, einer nicht linearen unscharfen Logik, sog. Fuzzy-Logik, innerhalb eines Regelkreises unter Verwendung von gemessenen Stellgrößen.

Ein Regler mit Fuzzy-Logik weist jedes Eingangsmuster einer oder mehreren Mengen einer Mitgliedsgradfunktion zu. Danach werden Interferenzregeln oder Auswahlregeln zur Erzeugung von Ausgangswerten anhand der Mitgliedsgradmengen der Eingangsvariablen verwendet. Die Ausgangsgrößen werden dann "defuzzyfiziert", um Regelausgangssignale zu erzeugen. Fuzzy-Entscheidungsparameter, beispielsweise die Mitgliedsgradfunktionen, werden optimiert bzw. abgestimmt, um die gewünschten Regeleigenschaften zu verwirklichen.

Das erfindungsgemäße Verfahren regelt die Temperatur in einem Raum, der aus einer oder mehreren Zellen besteht, wobei die Regelung der Temperatur durch ein Heizsystem mit mindestens einem Regelungsgerät erfolgt. In der in Fig. 7 dargestellten beispielhaften Ausführungsform der vorliegenden Erfindung werden als Stellgrößen die Temperatur im Lufteinlasskanal vor der Heizung 71, die Soll-Temperatur in der ersten Zelle 72 und die Änderungsrate der Temperatur im Lufteinlasskanal vor der Heizung 73 gemessen. Die Messung der drei Stellgrößen erfolgt hierbei durch die beiden Temperaturfühler 14, 16 (abgebildet in Fig. 1). Als nächster Schritt (S 70) wird eine Steuergröße zur Steuerung der Heizung auf der Basis der gemessenen Stellgrößen berechnet, wobei die Berechnung der Steuergröße durch eine nicht lineare Fuzzy-Logik unter Verwendung der gemessenen Stellgrößen 71, 72, 73 erfolgt. Die zur Berechnung der Steuergrößen verwendete nicht lineare Fuzzy-Logik basiert hierbei auf UND-Verknüpfungen und zentroide Verfahren, die dem Stand der Technik wohl bekannt sind und auf die hier nicht näher eingegangen werden soll.

Nach Berechnung der Steuergrößen in Schritt S 74 werden die berechneten Steuergrößen an das Regelungsgerät für die Heizung übergeben (S 75). Nachfolgend findet eine Regelung der Heizleistung in Schritt S 76 statt, welche in einer Änderung der Temperatur in der ersten Zelle resultiert (S 77).

Bei dem hier dargestellten Verfahren handelt es sich um eine feed-forward Steuerung. Der Vorteil des hier dargestellten Verfahrens liegt, neben der Nicht-Linearität der Fuzzy-Logik, darin, dass hier insbesondere die Temperatur im Lufteinlasskanal vor der Heizung berücksichtigt wird. Somit werden z.B. Temperaturschwankungen im Lufteinlasskanal vor der Heizung rechtzeitig erkannt, so dass die Heizung dagegen regeln kann, bevor eine merkliche Schwankung der Kabinentemperatur auftritt. Als weitere Stellgröße kann die Änderungsrate der Temperatur im Lufteinlasskanal vor der Heizung verwendet werden, so dass beispielsweise die Heizung nicht heizt, während sich das Trimmventil in einer Stabilisierungsphase befindet. Auf diese Weise kann sichergestellt werden, dass es zu keiner Interferenz zwischen den beiden Regelungsgeräten (Trimmventil und Heizungsregler) kommt. Das System kann beispielsweise so eingestellt werden, dass, wenn die Änderungsrate der Temperatur im Lufteinlasskanal vor der Heizung eine bestimmte Größe übersteigt, die Heizleistung auf Null geschaltet wird.

Um diesen Fuzzy-Block zu entwerfen, muss das entsprechende Zellenmodell oder Kabinenmodell in einer offenen Schleife berechnet werden, so dass die Eingabegrößen des Fuzzy-Blocks ihren entsprechenden Mitgliedsgradfunktionen zugeordnet werden. Die Steuergröße, die von der Fuzzy-Regelung ausgegeben wird, ist die einzustellende Heizleistung der Heizung in der Einheit PWM (Pulse Width Modulation).

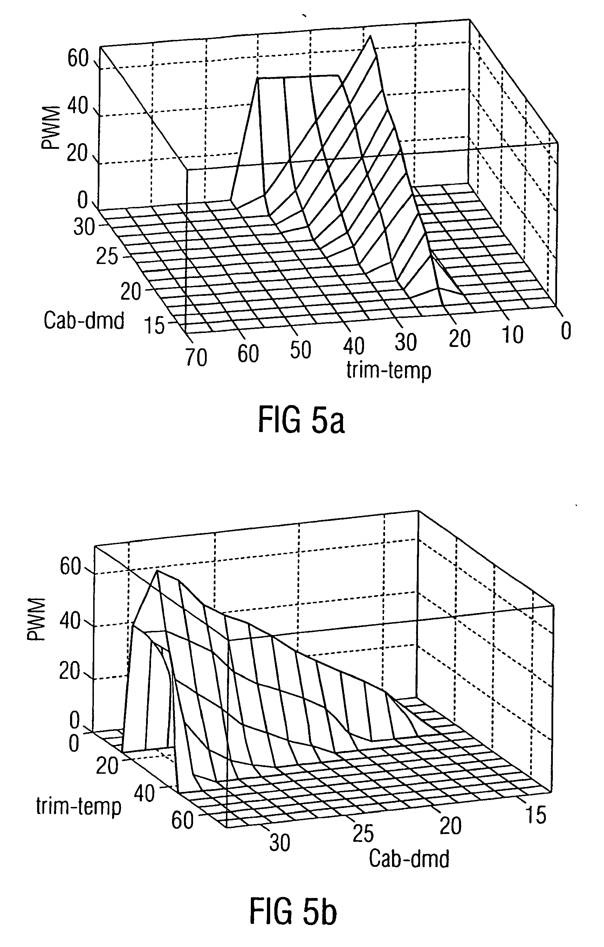

Fig. 5 a zeigt eine 3-dimensionale Darstellung des Zusammenhangs zwischen dem Soll-Wert der Kabinentemperatur (Cab-dmd), der Temperatur im Lufteinlasskanal (trim-temp) und dem Steuerungssignal an die Heizung bzw. der Heizleistung (PWM).

Der in den Fig. 5 a und 5 b dargestellte Zusammenhang ist mit Matlab/simulink berechnet.

Fig. 5b zeigt den Zusammenhang von Fig. 5 a in einer anderen Perspektive. Die Fläche, bei der der PWM-Wert Null beträgt, ist eine Fläche, auf der entweder der Soll-Wert nicht eingestellt werden kann, weil beispielsweise die Temperatur im Lufteinlasskanal vor der Heizung zu hoch ist, oder es handelt sich z.B. um eine Stelle, an der die Temperatur im Lufteinlasskanal vor der Heizung zu niedrig ist und der Soll-Wert der Temperatur in der ersten Zelle zu hoch ist.

Weiterhin kann die Regelung derart ausgeführt sein, dass, wenn sich die Temperatur dem Soll-Wert auf einen gewissen Betrag annähert (auf beispielsweise 2°C oder 5°C), die Steuerung diese Abweichung vom Soll-Wert ignoriert und die Heizleistung auf Null zurückgeregelt wird.

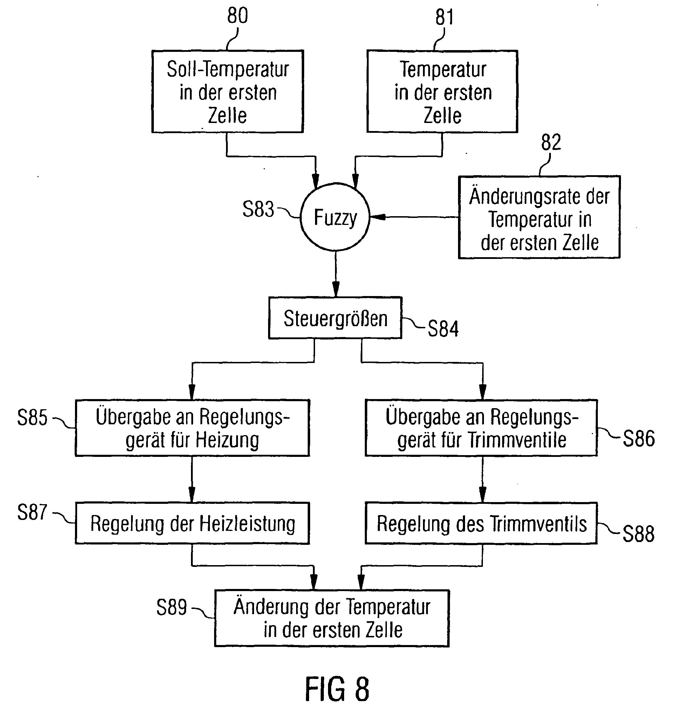

Fig. 8 zeigt ein Flussdiagramm eines anderen Verfahrens gemäß einer anderen beispielhaften Ausführungsform der vorliegenden Erfindung. Das in Fig. 8 dargestellte Verfahren kann als zweiter Fuzzy-Block neben dem in Fig. 7 beschriebenen ersten Fuzzy-Block implementiert werden. Als Eingangsgrößen oder Stellgrößen dienen hier die Soll-Temperatur in der ersten Zelle 80 (die beispielsweise über ein Userinterface vom Bordpersonal eingegeben wird), die Temperatur in der ersten Zelle 81 (gemessen über Messfühler 16 in Fig. 1) und die Änderungsrate der Temperatur in der ersten Zelle 82 (ebenfalls gemessen über Messfühler 16 in Fig. 1). Die nicht lineare Fuzzy-Logik berechnet sodann in Schritt S 83 die Steuergrößen und gibt die berechneten Steuergrößen in Schritt S 84 aus.

Vorteil dieser Ausführungsform ist u. a., dass eine zeitweise Schwankung der Temperatur in Reichweite des Messfühlers 16 in der Kabine unter gewissen Umständen nicht beachtet wird, nämlich dann, wenn beispielsweise die Änderungsrate in einem bestimmten Intervall liegt oder der Fehler (der Unterschied zwischen Soll-Temperatur in der Kabine und gemessener Temperatur in der Kabine) in einem bestimmten entsprechenden Fehlerintervall liegt. Ein weiterer Vorteil dieses Verfahrens liegt in der Möglichkeit asymmetrischer Ausgabewerte, also asymmetrischer Ausgabesteuergrößen. Dies ist vorteilhaft, da die Heizung nur die Möglichkeit zum Heizen hat, aber nicht zum Kühlen. Innerhalb eines PID-Regelkreises wäre eine derartige asymmetrische Steuerung nicht möglich, da ein Fehler, also ein Unterschied zwischen Soll-Wert und Ist-Wert, immer in derselben Ausgabegröße resultiert, unabhängig beispielsweise von dem Vorzeichen des Fehlers.

Der in Fig. 8 dargestellte Fuzzy-Block ist dafür ausgelegt, den Fehler zwischen der Soll-Temperatur in der ersten Zelle oder Kabine und der Ist-Temperatur in der Kabine zu korrigieren. Die feed-forward Funktion kann so programmiert sein, dass die Steuergröße für das Regelungsgerät der Heizung auf Null gesetzt wird, wenn der Fehler zwischen Soll-Temperatur und Ist-Temperatur größer ist als +/-1 °C. In diesem Fall wird eine Steuergröße an das Regelungsgerät für das Trimmventil übergeben (S 86) und das Trimmventil entsprechend geregelt (S 88), was zu einer Änderung der Temperatur in der ersten Zelle führt (S 89). Weiterhin kann ein Intervallfenster erzeugt werden, in dem die Steuergröße für das Regelungsgerät für die Heizung Null beträgt, beispielsweise zwischen +3°C und +1,5°C und zwischen -3°C und -1,5°C. Weiterhin kann die Änderungsrate der Temperatur in der ersten Zelle 82 verwendet werden, um festzustellen, ob eine Änderung der Kabinentemperatur mit einem normalen Heizprozess zusammenhängt oder ob es sich hierbei um eine Störung, beispielsweise aufgrund einer Verwirbelung, handelt.

Wenn die entsprechenden Voraussetzungen vorliegen (z.B. wenn der Fehler zwischen -1°C und +1 °C liegt), wird eine Steuergröße an das Regelungsgerät für die Heizung übergeben (S 85) und die Heizleistung entsprechend geregelt (S 87). Auch dies führt zu einer Änderung der Temperatur in der ersten Zelle (S 89).

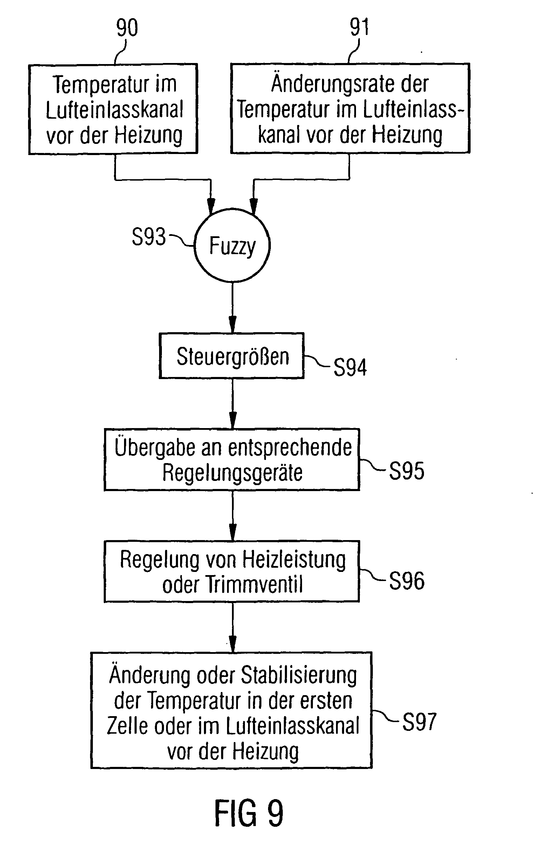

Fig. 9 zeigt ein weiteres Flussdiagramm eines Verfahrens gemäß einer anderen beispielhaften Ausführungsform der vorliegenden Erfindung. Dieses Verfahren kann in Form eines dritten Fuzzy-Blocks implementiert werden. Hier werden die Temperatur im Lufteinlasskanal vor der Heizung 90 und die Änderungsrate der Temperatur im Lufteinlasskanal vor der Heizung 91 gemessen. Die Messwerte werden dann der Fuzzy-Logik übergeben (S 93).
Vorteilhafterweise kann hierdurch eine Dämpfung der Temperatur in der Kabine erreicht werden, falls es zu Oszillationen in der Temperatur im Lufteinlasskanal vor der Heizung kommt. Die Ausgabegrößen der nicht linearen Fuzzy-Logik werden als Steuergrößen ausgegeben (S 94) und an die entsprechenden Regelungsgeräte übergeben (S 95). Daraufhin erfolgt eine Regelung der Heizleistung oder des Trimmventils (S 96) und es erfolgt eine Änderung oder Stabilisierung der Temperatur in der ersten Zelle oder der Temperatur im Lufteinlasskanal vor der Heizung (S 97).

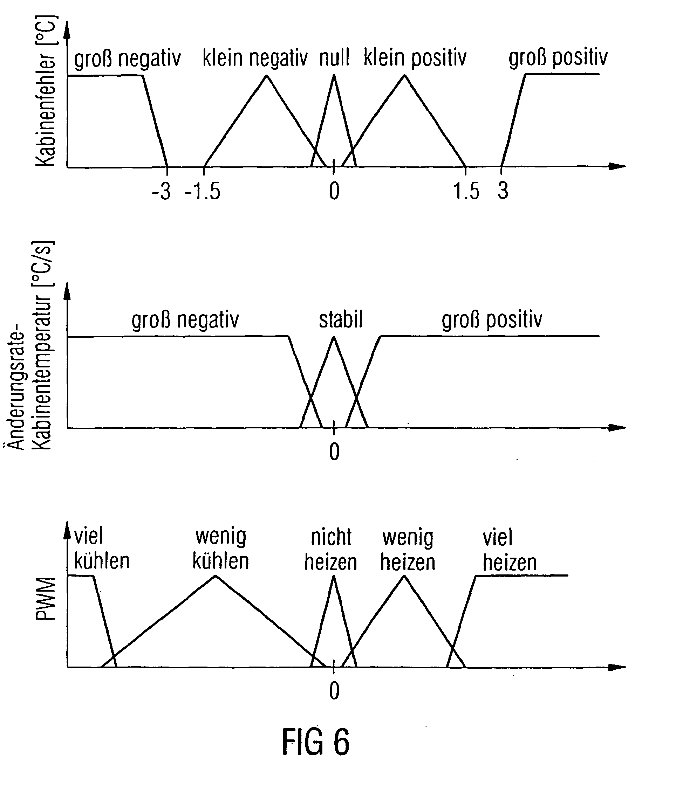

Fig. 6 zeigt eine Mitgliedsgradfunktion gemäß einer beispielhaften Ausführungsform der vorliegenden Erfindung. Als Ausgabe wird eine PWM für die Heizung erzeugt, die zu einer vorherig erzeugten PWM hinzuaddiert werden kann. Die vorherig erzeugte PWM kann beispielsweise in Form einer feed-forward Schleife, wie sie in Fig. 7 beschrieben wurde, erzeugt werden.

Um das Prinzip eines Fuzzy-Blocks, der als Eingabegrößen oder Stellgrößen die Ist-Temperatur in der Kabine oder ersten Zelle (mit anderen Worten: den Kabinenfehler) und die Änderungsrate der Kabinentemperatur umfasst und als Ausgabegröße oder Steuergröße die Heizleistung der Heizung (PWM), zu beschreiben, zeigt Fig. 6 die Mitgliedsgradfunktionen der beiden Stellgrößen und der Steuergröße. Liegt der Kabinenfehler zwischen -1,5°C und -3°C oder zwischen 1,5°C und 3°C, so ist der Ausgabe-PWM-Wert Null. Liegt somit der Fehler in der Kabinentemperatur in einem bestimmten Intervall, wird er im Regelungskreis nicht berücksichtigt. Zu beachten ist, dass die Intervallgrenzen hier willkürlich gewählt sind. Natürlich sind auch viele andere Intervallgrenzen vorteilhaft. Weiterhin ist es möglich, einen Ausgabe-PWM-Wert zu setzen, der einer leichten Kühlung oder einer leichten Erwärmung (wenig kühlen, wenig heizen) entspricht. Auf diese Weise wird ein Fehler in der Temperatur auf sanfte Weise korrigiert.

Weiterhin sind die Mitgliedsgradfunktionen des Kabinenfehlers um den Wert Null herum symmetrisch, die kombinierten Ausgabemitgliedsgradfunktionen (PWM) sind aber asymmetrisch. Dies bedeutet, dass Kabinenfehler x und Kabinenfehler (-x) nicht zu gleichen Ausgabewerten führen. Kabinenfehler < -3°C sind als groß negativ definiert, Kabinenfehler zwischen -1,5°C und annähernd -0°C sind als klein negativ definiert, Kabinenfehler um 0°C (beispielsweise zwischen -0,5°C und +0,5°C) sind als Null definiert, Kabinenfehler zwischen leicht positiver Temperatur und +1,5°C sind als klein positiv definiert und Kabinenfehler > 3°C sind als groß positiv definiert.

Die Änderungsrate in der Kabinentemperatur wird als Filter verwendet, wie die nachfolgenden Auswahlregeln zeigen:
Regel 1: Wenn der Kabinenfehler "groß negativ" ist UND die Änderungsrate der Kabinentemperatur stabil ist, dann ist PWM "viel kühlen";
Regel 2: Wenn Kabinenfehler "klein negativ" ist UND Änderungsrate der Kabinentemperatur "stabil" ist, dann ist PWM "wenig kühlen";
Regel 3: Wenn Kabinenfehler "Null" ist UND die Änderungsrate der Kabinentemperatur "stabil" ist, dann ist PWM "nicht heizen";
Regel 4: Wenn Kabinenfehler "klein positiv" ist UND die Änderungsrate der Kabinentemperatur "stabil" ist, dann ist PWM "wenig heizen";
Regel 5: Wenn der Kabinenfehler "groß positiv" ist UND die Änderungsrate der Kabinentemperatur "stabil" ist, dann ist PWM "viel heizen";
Regel 6: Wenn die Änderungsrate der Kabinentemperatur "groß negativ" ist, dann ist PWM "nicht heizen";
Regel 7: Wenn die Änderungsrate der Kabinentemperatur "groß positiv" ist, dann ist PWM "nicht heizen".

Nur wenn die Änderungsrate der Kabinentemperatur als stabil angenommen wird, wird der Kabinenfehler in eine entsprechende Heizleistung (PWM) übertragen, andernfalls wird der PWM-Wert auf Null gesetzt. Wenn also die Temperatur in der Kabine aufgrund einer externen Störung zu oszillieren beginnt, wobei diese Störung durch das Trimmventil oder der Temperatur der Luft aus dem Mischer (Bezugszeichen 12 in Fig. 1) hervorgerufen sein kann, trägt die Heizung nicht weiter zu diesen Oszillationen bei; vielmehr wird sie ausgeschaltet. Als weitere Stellgröße in dieser beispielhaften Ausführungsform der vorliegenden Erfindung ist auch die Änderungsrate der Temperatur im Lufteinlasskanal vor der Heizung denkbar.

Weiterhin sind zusätzliche Stellgrößen vorstellbar, wie beispielsweise die Flughöhe des Passagierflugzeuges oder aber auch Informationen darüber, wie lange die Motoren der Passagiermaschine schon laufen oder ob die Motoren gerade erst angeschaltet wurden. Wenn z. B. die Motoren nach einer langen kalten Winternacht angeschaltet und das Temperaturregelungssystem damit erstmalig wieder in Betrieb genommen wird, ist es vorstellbar, dass als einzige Stellgröße die Außentemperatur herangezogen wird, und das Regelungssystem für eine entsprechende Zeit, beispielsweise für fünf Minuten, mit voller Heizleistung läuft, bevor weitere Stellgrößen hinzugezogen werden.

Im übrigen können, gemäß einer weiteren beispielhaften Ausführungsform der vorliegenden Erfindung, die drei verschiedenen Fuzzy-Blöcke miteinander kombiniert werden. Somit kann eine zwar komplexe, aber schnelle und leistungsfähige Regelung der Temperatur in einem Verkehrsflugzeug realisiert werden. Weiterhin gilt zu beachten, dass die in Fig. 1 dargestellte Regelungseinrichtung Steuergeräte 10, 17 umfasst, die beispielsweise in einem gemeinsamen Gesamtsteuergerät angeordnet sein können, wobei sich in dem Gesamtsteuergerät ein Prozessor befindet, auf dem ein Computerprogramm ausführbar ist, dass den Prozessor anleitet, die folgenden Operationen auszuführen: Ein Abrufen von gemessenen Stellgrößen von den Messeinrichtungen 14, 15, 16; eine Berechnung von Steuergrößen zur Steuerung der Regelungsgeräte 13, 1 auf der Basis der gemessenen Stellgrößen. Hierbei erfolgt die Berechnung der Steuergrößen durch eine nicht lineare Fuzzy-Logik innerhalb des Regelkreises unter Verwendung der gemessenen Stellgrößen. Als weitere Operation erfolgt die Übergabe der berechneten Steuergrößen an eines oder an beide Regelungsgeräte zur Regelung der Temperatur von der Luft, die in die Zellen des Raumes eingeleitet wird, durch das mindestens eine Regelungsgerät unter Verwendung der berechneten Steuergrößen.

Es wird darauf hingewiesen, dass, obwohl obenstehend überwiegend auf eine Temperaturregelung Bezug genommen wurde, die vorliegende Erfindung auch eine Temperatursteuerung umfasst und der Begriff "Regelung" entsprechend der gewählten Ausführungsform sowohl die Steuerung ohne geschlossenen Regelkreis als auch mit geschlossenem Regelkreis umfasst.

## Patentansprüche

1. Verfahren zur Regelung der Temperatur in einem Raum in einem Luftfahrzeug, wobei der Raum aus einer oder mehreren Zellen besteht, wobei die Regelung der Temperatur durch ein Heizsystem, das ein erstes Regelungsgerät aufweist, erfolgt, wobei das erste Regelungsgerät eine Heizung (1) ist, und wobei das Verfahren die folgenden Schritte umfasst:
Messung von Stellgrößen, umfassend eine Änderungsrate der Temperatur in einer ersten Zelle und eine Änderungsrate der Temperatur im Lufteinlasskanal vor der Heizung;
Berechung von Steuergrößen zur Steuerung des mindestens einen Regelungsgeräts auf der Basis der gemessenen Stellgrößen, wobei die Berechnung der Steuergrößen durch eine nicht lineare Fuzzy-Logik innerhalb eines Regelkreises unter Verwendung der gemessenen Stellgrößen erfolgt;
Übergabe der berechneten Steuergrößen an das mindestens eine Regelungsgerät; und
Regelung der Temperatur von in die Zellen des Raumes eingeleiteter Luft durch das mindestens eine Regelungsgerät unter Verwendung der berechneten Steuergrößen.

2. Verfahren nach Anspruch 1, wobei das Heizsystem umfasst:
ein erstes Regelungsgerät;
ein zweites Regelungsgerät;
ein Steuergerät;
wobei das zweite Regelungsgerät ein Trimmventil zur Regelung der Einlassraten von Luft aus einem Luftmischer und Luft aus einem Zapfluftverdichter ist und das erste Regelungsgerät eine Heizung zum Erwärmen der Luft aus dem Trimmventil ist; und
wobei das Steuergerät zur Steuerung des Trimmventils oder zur Steuerung der Heizleistung der Heizung ausgeführt ist.

3. Verfahren nach Anspruch 1 oder 2, wobei die gemessenen Stellgrößen zusätzlich eine oder mehrere der folgenden Größen umfassen:
eine Temperatur in einem Lufteinlasskanal vor der Heizung;
eine Temperatur innerhalb der Heizung;
eine Temperatur in der ersten Zelle;
eine Soll-Temperatur in der ersten Zelle.

4. Verfahren nach einem der vorhergehenden Ansprüche, wobei die nicht lineare Fuzzy-Logik zur Berechung der Steuergrößen aus den Stellgrößen auf UND-Verknüpfungen und zentroide Verfahren basiert.

5. Verfahren nach einem der Ansprüche 3 oder 4, wobei in einem ersten Fuzzy-Block die Steuergrößen aus der Temperatur im Lufteinlasskanal vor der Heizung und der Soll-Temperatur in der ersten Zelle berechnet werden.

6. Verfahren nach Anspruch 5, wobei die Steuergrößen in dem ersten Fuzzy-Block weiterhin aus der Änderungsrate der Temperatur im Lufteinlasskanal vor der Heizung berechnet werden.

7. Verfahren nach einem der Ansprüche 3 bis 6, wobei in einem zweiten Fuzzy-Block die Steuergrößen aus der Temperatur in der ersten Zelle, der Soll-Temperatur in der ersten Zelle und der Änderungsrate der Temperatur in der ersten Zelle berechnet werden.

8. Verfahren nach einem der Ansprüche 3 bis 7, wobei in einem dritten Fuzzy-Block die Steuergrößen aus der Temperatur im Lufteinlasskanal vor der Heizung und der Änderungsrate der Temperatur im Lufteinlasskanal vor der Heizung berechnet werden.

9. Verfahren nach Anspruch 8, wobei der erste, zweite und dritte Fuzzy-Block miteinander kombinierbar sind.

10. Verfahren nach einem der Ansprüche 2 bis 9, wobei die berechneten Steuergrößen umfassen:
eine erste berechnete Steuergröße, mit der das Steuergerät das erste Regelungsgerät steuert; und
eine zweite berechnete Steuergröße, mit der das Steuergerät das zweite Regelungsgerät steuert.

11. Verfahren nach einem der vorhergehenden Ansprüche,
wobei die Zellen innerhalb der Druckkammer eines Flugzeugs angeordnet sind; und
wobei die Zellen Cockpit, Sanitärzellen und Sitzbereiche für Bordpersonal und Fluggäste umfassen.

12. Regelungseinrichtung zur Regelung der Temperatur in einem Raum in einem Luftfahrzeug, wobei der Raum aus einer oder mehreren Zellen besteht,
wobei die Regelungseinrichtung umfasst:
ein Heizsystem , das ein erstes Regelungsgerät aufweist, wobei das erste Regelungsgerät eine Heizung (1) ist;
mindestens einen Sensor zur Messung von Stellgrößen, umfassend eine Änderungsrate der Temperatur in einer ersten Zelle und eine Änderungsrate der Temperatur im Lufteinlasskanal vor der Heizung;
einen Prozessor zur Berechung von Steuergrößen zur Steuerung des mindestens einen Regelungsgeräts auf der Basis der gemessenen Stellgrößen, wobei die Berechnung der Steuergrößen durch eine nicht lineare Fuzzy-Logik innerhalb eines Regelkreises unter Verwendung der gemessenen Stellgrößen erfolgt;
mindestens ein Datenübertragungsmittel zur Übergabe der berechneten Steuergrößen an das mindestens eine Regelungsgerät, wobei das mindestens eine Regelungsgerät zur Regelung der Temperatur von in die Zellen des Raumes eingeleiteter Luft unter Verwendung der berechneten Steuergrößen ausgeführt ist.

13. Regelungseinrichtung nach Anspruch 12, wobei das Heizsystem umfasst:
ein erstes Regelungsgerät;
ein zweites Regelungsgerät;
ein Steuergerät;
wobei das zweite Regelungsgerät ein Trimmventil zur Regelung der Einlassraten von Luft aus einem Luftmischer und Luft aus einem Zapfluftverdichter ist und das erste Regelungsgerät eine Heizung zum Erwärmen der Luft aus dem Trimmventil ist;
wobei das Steuergerät zur Steuerung des Trimmventils oder zur Steuerung der Heizleistung der Heizung ausgeführt ist;
wobei die gemessenen Stellgrößen zusätzlich eine oder mehrere der folgenden Größen umfassen:
eine Temperatur in einem Lufteinlasskanal vor der Heizung;
eine Temperatur innerhalb der Heizung;
eine Temperatur in einer ersten Zelle;
eine Soll-Temperatur in der ersten Zelle.

14. Regelungseinrichtung nach Anspruch 12 oder 13,
wobei die nicht lineare Fuzzy-Logik zur Berechung der Steuergrößen aus den Stellgrößen auf UND-Verknüpfungen und zentroide Verfahren basiert;
wobei in einem ersten Fuzzy-Block die Steuergrößen aus der Temperatur im Lufteinlasskanal vor der Heizung oder der Soll-Temperatur in der ersten Zelle oder der Änderungsrate der Temperatur im Lufteinlasskanal vor der Heizung berechnet werden;
wobei in einem zweiten Fuzzy-Block die Steuergrößen aus der Temperatur in der ersten Zelle, der Soll-Temperatur in der ersten Zelle und der Änderungsrate der Temperatur in der ersten Zelle berechnet werden;
wobei in einem dritten Fuzzy-Block die Steuergrößen aus der Temperatur im Lufteinlasskanal vor der Heizung und der Änderungsrate der Temperatur im Lufteinlasskanal vor der Heizung berechnet werden; und
wobei der erste, zweite und dritte Fuzzy-Block miteinander kombinierbar sind.

15. Computerprogramm zur Steuerung eines Heizsystems, das ein erstes Regelungsgerät aufweist, zur Regelung der Temperatur in einem Raum in einem Luftfahrzeug, wobei das erste Regelungsgerät eine Heizung (1) ist, wobei der Raum aus einer oder mehreren Zellen besteht,
wobei das Computerprogramm, wenn es auf einem Prozessor ausgerührt wird, den Prozessor anleitet, die folgenden Operationen auszuführen:
Abrufen von gemessenen Stellgrößen, umfassend eine Änderungsrate der Temperatur in einer ersten Zelle und eine Änderungsrate der Temperatur im Lufteinlasskanal vor der Heizung;
Berechung von Steuergrößen zur Steuerung des mindestens einen Regelungsgeräts auf der Basis der gemessenen Stellgrößen, wobei die Berechnung der Steuergrößen durch eine nicht lineare Fuzzy-Logik innerhalb eines Regelkreises unter Verwendung der gemessenen Stellgrößen erfolgt;
Übergabe der berechneten Steuergrößen an das mindestens eine Regelungsgerät zur Regelung der Temperatur von in die Zellen des Raumes eingeleiteter Luft durch das mindestens eine Regelungsgerät unter Verwendung der berechneten Steuergrößen.

## Claims

1. A method for automatic control of the temperature in an area in an aircraft, wherein the area consists of one cell or a plurality of cells, wherein the automatic control of the temperature occurs by means of a heating system which includes a first automatic control device, wherein the first automatic control device is a heater (1), and wherein the method comprises the following steps:
measurement of manipulated variables, comprising a change rate of the temperature in a first cell and a change rate of the temperature in the air inlet duct ahead of the heater;
computation of control parameters for controlling the at least one automatic control device based on the measured manipulated variables, wherein the computation of the control parameters occurs through a non-linear fuzzy logic within a control loop under utilization of the measured manipulated variables;
transfer of the computed control parameters through the at least one automatic control device; and
automatic control of the temperature of air introduced into the cells of the area by the at least one automatic control device under utilization of the computed control parameters.

2. The method according to claim 1, wherein the heating system comprises:
a first automatic control device;
a second automatic control device;
a control device;
wherein the second automatic control device is a trimming valve for automatic control of the inlet rates of air from an air mixer and air from a bleed air compressor, and the first automatic control device is a heater for heating the air from the trimming valve; and
wherein the control device is adapted for controlling the trimming valve or for controlling the heating power of the heater.

3. The method according to claim 1 or 2, wherein the measured manipulated variables additionally comprise one or more of the following entities:
a temperature in an air inlet duct ahead of the heater;
a temperature within the heater;
a temperature in the first cell;
a target temperature in the first cell.

4. The method according to one of the proceeding claims, wherein the non-linear fuzzy logic for the computation of the control parameters from the manipulated variables is based on AND operations and centroid methods.

5. The method according to one of claims 3 and 4, wherein in a first fuzzy block the control parameters are calculated from the temperature in the air inlet duct ahead of the heater and the target temperature in the first cell.

6. The method according to claim 5, wherein the control parameters in the first fuzzy block are additionally computed from the change rate of the temperature in the air inlet duct ahead of the heater.

7. The method according to one of claims 3 to 6, wherein in a second fuzzy block the control parameters are computed from the temperature in the first cell, the target temperature in the first cell, and the change rate of the temperature in the first cell.

8. The method according to one of claims 3 to 7, wherein in a third fuzzy block the control parameters are calculated from the temperature in the air inlet duct ahead of the heater and the change rate of the temperature in the air inlet duct ahead of the heater.

9. The method according to claim 8, wherein the first, the second and the third fuzzy block can be combined with each other.

10. The method according to one of claims 2 to 9, wherein the computed control parameters comprise:
a first computed control parameter, with which the control device controls the first automatic control device; and
a second computed control parameter, with which the control device controls the second automatic control device.

11. The method according to one of the proceeding claims,
wherein the cells are arranged within the pressurized chamber of an airplane; and
wherein the cells comprise cockpit, sanitary cells, and seating areas for the cabin crew and passengers.

12. An automatic control equipment for automatic control of the temperature in an area in an aircraft, wherein the area consists of one cell or a plurality of cells,
wherein the automatic control equipment comprises:
a heating system which includes a first automatic control device, wherein the first automatic control device is a heater (1);
at least one sensor for measurement of manipulated variables, comprising a change rate of a temperature in a first cell and a change rate of the temperature in the air inlet duct ahead of the heater;
a processor for computing control parameters for controlling the at least one automatic control device based on the measured manipulated variables, wherein the computation of the control parameters occurs through a non-linear fuzzy logic within a control loop under utilization of the measured manipulated variables;
at least one data communication means for a transfer of the computed control parameters to the at least one automatic control device, wherein the at least one automatic control device is adapted for automatic control of the temperature of air introduced into the cells of the area under utilization of the computed control parameters.

13. The automatic control equipment according to claim 12, wherein the heating system comprises:
a first automatic control device;
a second automatic control device;
a control device;
wherein the second automatic control device is a trimming valve for automatic control of the inlet rates of air from an air mixer and air from a bleed air compressor, and the first automatic control device is a heater for heating the air from the trimming valve;
wherein the control device is adapted to control the trimming valve or to control the heating power of the heater;
wherein the measured manipulated variables additionally comprise one or several of the following entities:
a temperature in an air inlet duct ahead of the heater;
a temperature within the heater;
a temperature in a first cell;
a target temperature in the first cell.

14. The automatic control equipment according to claim 12 or 13,
wherein the non-linear fuzzy logic for computing the control parameters from the manipulated variables is based on AND operations and centroid methods;
wherein in a first fuzzy block the control parameters are computed from the temperature in the air inlet duct ahead of the heater or the target temperature in the first cell or the change rate of the temperature in the air inlet duct ahead of the heater;
wherein in a second fuzzy block the control parameters are computed from the temperature in the first cell, the target temperature in the first cell, and the change rate of the temperature in the first cell;
wherein in a third fuzzy block the control parameters are computed from the temperature in the are inlet duct ahead of the heater and the change rate of the temperature in the air inlet duct ahead of the heater; and
wherein the first, the second, and the third fuzzy block can be combined with each other.

15. A computer program for control of a heating system which includes a first automatic control device, for automatic control of a temperature in an area in an aircraft, wherein the first automatic control device is a heater (1), wherein the area consists of one cell or a plurality of cells,
wherein the computer program, when it is executed on a processor, instructs the processor to execute the following operations:
fetching measured manipulated variables, comprising a change rate of the temperature in a first cell and a change rate of the temperature in the air inlet duct ahead of the heater;
computing control parameters for controlling the at least one automatic control device based on the measured manipulated variables, wherein the computing of the control parameters occurs through a non-linear fuzzy logic within a control loop under utilization of the measured manipulated variables;
transmission of the computed control parameters to the at least one automatic control device for automatic control of a temperature of air introduced into the cells of the area by the at least one automatic control device under utilization of the computed control parameters.

## Revendications

1. Procédé pour réguler la température dans un espace situé dans un avion, dans lequel l'espace est constitué d'une ou plusieurs cellules, dans lequel la régulation de la température s'effectue au moyen d'un système de chauffage comportant un premier régulateur, dans lequel le premier régulateur est un dispositif de chauffage (1), et le procédé comportant les étapes suivantes consistant à :
mesurer des grandeurs de réglage incluant une vitesse de variation de la température dans une première cellule et une vitesse de variation de la température dans le conduit d'entrée d'air en amont du dispositif de chauffage,
calculer des grandeurs de commande pour commander le au moins un régulateur sur la base des grandeurs de réglage mesurées, le calcul des grandeurs de commande étant effectué au moyen d'une logique floue non linéaire dans un circuit de régulation en utilisant les grandeurs de réglage mesurées,
transférer les grandeurs de commande calculées vers le au moins un régulateur, et
réguler la température de l'air introduit dans les cellules de l'espace au moyen du au moins un régulateur en utilisant les grandeurs de commande calculées.

2. Procédé selon la revendication 1, dans lequel le système de chauffage comporte :
un premier régulateur,
un second régulateur,
une unité de commande,
dans lequel le second régulateur est une soupape d'équilibrage pour réguler la vitesse d'entrée de l'air provenant d'un mélangeur d'air et de l'air provenant d'un compresseur d'air de prélèvement, et le premier régulateur est un dispositif de chauffage pour réchauffer l'air provenant de la soupape d'équilibrage, et
dans lequel l'unité de commande est adaptée pour commander la soupape d'équilibrage ou pour commander la puissance de chauffage du dispositif de chauffage.

3. Procédé selon la revendication 1 ou 2, dans lequel les grandeurs de réglage mesurées comportent en outre une ou plusieurs des grandeurs suivantes :
une température dans un conduit d'entrée d'air en amont du dispositif de chauffage,
une température à l'intérieur du dispositif de chauffage,
une température dans la première cellule,
une température de consigne dans la première cellule.

4. Procédé selon l'une des revendications précédentes, dans lequel la logique floue non linéaire pour calculer les grandeurs de commande à partir des grandeurs de réglage est basée sur des fonctions logiques ET et un procédé centroïde.

5. Procédé selon l'une des revendications 3 ou 4, dans lequel, dans un premier bloc flou, les grandeurs de commande sont calculées à partir de la température dans le conduit d'entrée d'air en amont du dispositif de chauffage et de la température de consigne dans la première cellule.

6. Procédé selon la revendication 5, dans lequel les grandeurs de commande dans le premier bloc flou sont en outre calculées à partir de la vitesse de variation de la température dans le conduit d'entrée d'air en amont du dispositif de chauffage.

7. Procédé selon l'une des revendications 3 à 6, dans lequel, dans un deuxième bloc flou, les grandeurs de commande sont calculées à partir de la température dans la première cellule, de la température de consigne dans la première cellule et de la vitesse de variation de la température dans la première cellule.

8. Procédé selon l'une des revendications 3 à 7, dans lequel, dans un troisième bloc flou, les grandeurs de commande sont calculées à partir de la température dans le conduit d'entrée d'air en amont du dispositif de chauffage et de la vitesse de variation de la température dans le conduit d'entrée d'air en amont du dispositif de chauffage.

9. Procédé selon la revendication 8, dans lequel les premier, deuxième et troisième blocs flous peuvent être combinés les uns avec les autres.

10. Procédé selon l'une des revendications 2 à 9, dans lequel les grandeurs de commande calculées comportent :
une première grandeur de commande calculée, avec laquelle l'unité de commande commande le premier régulateur, et
une seconde grandeur de commande calculée, avec laquelle l'unité de commande commande le second régulateur.

11. Procédé selon l'une des revendications précédentes,
dans lequel les cellules sont agencées à l'intérieur de la chambre de pression d'un avion, et
dans lequel les cellules comportent un poste de pilotage, des cellules sanitaires et des zones de sièges pour le personnel navigant et les passagers.

12. Dispositif de régulation pour réguler la température dans un espace situé dans un avion, l'espace étant constitué d'une ou plusieurs cellules,
le dispositif de régulation comportant :
un système de chauffage comportant un premier régulateur, dans lequel le premier régulateur est un dispositif de chauffage (1),
au moins un capteur pour mesurer des grandeurs de réglage incluant une vitesse de variation de la température dans une première cellule et une vitesse de variation de la température dans le conduit d'entrée d'air en amont du dispositif de chauffage,
un processeur pour calculer des grandeurs de commande pour commander le au moins un régulateur sur la base des grandeurs de réglage mesurées, dans lequel le calcul des grandeurs de commande est effectué au moyen d'une logique floue non linéaire dans un circuit de régulation en utilisant les grandeurs de réglage mesurées,
au moins des moyens de transmission de données pour transmettre les grandeurs de commande calculées au au moins un régulateur, dans lequel le au moins un régulateur est adapté pour réguler la température de l'air introduit dans les cellules de l'espace en utilisant les grandeurs de commande calculées.

13. Dispositif de régulation selon la revendication 12, dans lequel le système de chauffage comporte :
un premier régulateur,
un second régulateur,
une unité de commande,
dans lequel le second régulateur est une soupape d'équilibrage pour réguler la vitesse d'entrée de l'air provenant d'un mélangeur d'air et de l'air provenant d'un compresseur d'air de prélèvement, et le premier régulateur est un dispositif de chauffage pour réchauffer l'air provenant de la soupape d'équilibrage,
dans lequel l'unité de commande est adaptée pour commander la soupape d'équilibrage ou pour commander la puissance de chauffage du dispositif de chauffage,
dans lequel les grandeurs de réglage mesurées comportent en plus une ou plusieurs des grandeurs suivantes :
une température dans un conduit d'entrée d'air en amont du dispositif de chauffage,
une température à l'intérieur du dispositif de chauffage,
une température dans une première cellule,
une température de consigne dans la première cellule.

14. Dispositif de régulation selon la revendication 12 ou 13,
dans lequel la logique floue non linéaire pour calculer les grandeurs de commande à partir des grandeurs de réglage est basée sur des fonctions logiques ET et un procédé centroïde,
dans lequel, dans un premier bloc flou, les grandeurs de commande sont calculées à partir de la température dans le conduit d'entrée d'air en amont du dispositif de chauffage ou de la température de consigne dans la première cellule ou de la vitesse de variation de la température dans le conduit d'entrée d'air en amont du dispositif de chauffage,
dans lequel, dans un deuxième bloc flou, les grandeurs de commande sont calculées à partir de la température dans la première cellule, de la température de consigne dans la première cellule et de la vitesse de variation de la température dans la première cellule,
dans lequel, dans un troisième bloc flou, les grandeurs de commande sont calculées à partir de la température dans le conduit d'entrée d'air en amont du dispositif de chauffage et de la vitesse de variation de la température dans le conduit d'entrée d'air en amont du dispositif de chauffage, et
dans lequel les premier, deuxième et troisième blocs flous peuvent être combinés les uns avec les autres.

15. Programme informatique pour commander un système de chauffage comportant un premier régulateur, pour réguler la température dans un espace situé dans un avion, dans lequel le premier régulateur est un dispositif de chauffage (1), dans lequel l'espace est constitué d'une ou plusieurs cellules,
le programme informatique, lorsqu'il est exécuté par un processeur, amenant le processeur à exécuter les opérations suivantes :
récupérer des grandeurs de réglage mesurées, incluant une vitesse de variation de la température dans une première cellule et une vitesse de variation de la température dans le conduit d'entrée d'air en amont du dispositif de chauffage,
calculer des grandeurs de commande pour commander le au moins un régulateur sur la base des grandeurs de réglage mesurées, le calcul des grandeurs de commande étant effectué au moyen d'une logique floue non linéaire à l'intérieur d'un circuit de régulation en utilisant les grandeurs de réglage mesurées,
transmettre les grandeurs de commande calculées au au moins un régulateur pour réguler la température de l'air introduit dans les cellules de l'espace au moyen du au moins un régulateur en utilisant les grandeurs de commande calculées.
